(19) Europäisches Patentamt
European Patent Office
Office européen des brevets

(11) **EP 1 724 301 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
*C08L 9/00* (2006.01)     *C08L 21/00* (2006.01)
*A63B 37/00* (2006.01)    *A63B 59/04* (2006.01)

(21) Anmeldenummer: **06112996.1**

(22) Anmeldetag: **24.04.2006**

(54) **Mikrogel-enthaltende vulkanisierbare Zusammensetzung**

Microgel-containing vulcanizable composition

Composition vulcanisable contenant un microgel

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.05.2005 DE 102005023213**

(43) Veröffentlichungstag der Anmeldung:
**22.11.2006 Patentblatt 2006/47**

(73) Patentinhaber:
• **RHEIN-CHEMIE RHEINAU GmbH**
**68219 Mannheim (DE)**
• **LANXESS Deutschland GmbH**
**51369 Leverkusen (DE)**
• **Lanxess Inc.**
**Sarnia,**
**Ontario M7T 7M2 (CA)**

(72) Erfinder:
• **Früh, Thomas**
**67117, Limburgerhof (DE)**
• **Obrecht, Werner Dr.**
**47447, Moers (DE)**
• **Hannay, Judy Dr.**
**Beaumont, TX 77713 (US)**

(74) Vertreter: **Gille Hrabal Struck Neidlein Prop Roos Patentanwälte**
**Brucknerstrasse 20**
**40593 Düsseldorf (DE)**

(56) Entgegenhaltungen:
**EP-A- 1 078 953      EP-A- 1 520 732**
**US-A1- 2001 006 995      US-A1- 2002 177 661**

**Beschreibung**

EINLEITUNG:

Die vorliegenden Erfindung betrifft eine vulkanisierbare Zusammensetzung, vulkanisierte Erzeugnisse, die daraus hergestellt werden, und deren Verwendung insbesondere in der Herstellung von Golfbällen, Tischtennisschlägerbelägen oder Walzenbelägen.

STAND DER TECHNIK

Der Einsatz von Mikrogelen zur Eigenschaftssteuerung von Elastomeren ist bekannt (z.B. EP-A-405216, DE-A 4220563, GB-PS 1078400, DE 19701487, DE 19701489, DE 19701488, DE 19834804, DE 19834803, DE 19834802, DE 19929347, DE 19939865, DE 19942620, DE 19942614, DE 10021070, DE 10038488, DE10039749, DE 10052287, DE 10056311 und DE 10061174).

Golfballkernrezepturen enthalten üblicherweise hoch cis-BR Kautschuk, Zinkdiacrylat bzw. Zinkdimethacrylat und Peroxid. Golfbälle sind in ihren Dimensionen (Mindestdurchmesser, Gewicht, etc.) normiert. Die Anpassung beispielsweise der Dichte zur Einstellung von Mindestdurchmesser und Gewicht erfolgt üblicherweise mit Additiven mit einer hohen Dichte wie beispielsweise Bariumsulfat, Zinkoxid oder auch Ruß. Bei dieser Vorgehensweise ist es nachteilig, daß sich sowohl Verarbeitungseigenschaften als auch Materialeigenschaften in unerwünschter Weise ändern können.

Derartige konventionelle Golfballkernrezepturen sind beispielsweise beschrieben in US 4715607, US 4955613 (EP-A-0386915), US 5836831, US 6001930, JP-A-2004180729, JP62089750A2 (US 4683257), JP2004337231A2, JP2004180716A2, JP2002355339A2 (US20030013553A1), US20020119837A1, WO0152947A1, WO0152945A1 und WO0152943A1.

Die vorliegende Erfindung hat sich insbesondere zur Aufgabe gestellt, die Eigenschaften dieser bekannten Zusammensetzungen weiter zu verbessern.

BESCHREIBUNG DER ERFINDUNG

Diese Patentanmeldung zeigt einen Weg auf, wie sich durch die Verwendung von Mikrogelen mit einem Dienkautschuk (z.B. BR, NBR), insbesondere Metalldiacrylaten bzw. Metalldimethacrylaten, einem Peroxid und gegebenenfalls weiterer Mischungsbestandteilen das Verarbeitungsverhalten und die Dichte der daraus hergestellten vulkanisierte Erzeugnisse in vorteilhafter Weise steuern lässt, ohne daß bei den Materialeigenschaften wie beispielsweise Rückprallelastizität oder Rücksprunghöhe Einbußen hingenommen werden müssen. Im Gegenteil werden bestimmte Materialeigenschaften wie beispielsweise Zugfestigkeit oder Reißdehnung vorteilhaft beeinflußt.

So zeigen die erfindungsgemäß verwendeten Zusammensetzungen überraschend Vorteile in Bezug auf das Produktionsverfahren (häufig durch Injection Moulding) der vulkanisierten Erzeugnisse. So ließen sich die erfindungsgemäßen Mikrogel-haltigen Mischungen besser entformen (geringere Klebrigkeit) was zu einer geringeren Formverschmutzung im Produktionsprozeß führt. Die erfindungsgemäßen Mikrogel-haltige Zusammensetzungen erlauben weiterhin eine unveränderte Inkubationszeit und eine unveränderte Anvulkanisationszeit (z.B. t10) bei gleichzeitig kleinerer Ausvulkanisationszeit (t90 und t95). Weiterhin ergeben sich Vorteile in Bezug auf die Materialeigenschaften.

So erlauben die erfindungsgemäßen Mikrogel-haltigen Mischungen bei gegebener Dichte eine hohe Härte mit gleichzeitig hoher Rückprallelastizität, guter Mechanik (Zugfestigkeit und Reißdehnung) bei rascher Erholung nach mechanischer Kompression, während ohne Mikrogele Einbußen bei einem Teil der Eigenschaften hingenommen werden. Je nachdem, ob Mikrogele als Additiv oder in teilweisem Austausch zur Matrix eingesetzt werden, sind die Eigenschaften steuerbar. Dies geht bei den bekannten Zusammensetzungen nicht, weil beispielsweise Zinkdiacrylat und Zinkdimethacrylat keine Matrixeigenschaften haben, also immer als Additiv dosiert werden müssen. Weiterhin zeigen verschiedene Mikrogele unterschiedliches Verhalten beispielsweise in Bezug auf die Rückprallelastizität, d.h., daß sie gezielt dämpfen oder auch nicht dämpfen können. Dadurch lassen sich die Eigenschaften der erfindungsgemäßen vulkanisierten Erzeugnisse durch Auswahl eines geeigneten Mikrogel-Typs gezielt steuern.

Die vorliegende Erfindung stellt somit eine vulkanisierbare Zusammensetzung bereit, enthaltend

  a) mindestens ein Dienkautschuk,
  b) mindestens eine ungesättigte Carbonsäure oder ein Salz davon,
  c) mindestens ein Peroxid sowie
  d) mindestens ein Mikrogel.

Der Dienkautschuk wird bevorzugt ausgewählt aus der Gruppe, die besteht aus: NR: Naturkautschuk, SIBR: Styrol/Isopren/Butadienkautschuk, BR: Polybutadienkautschuk, SNBR: Styrol/Butadien/Acrylnitril-Kautschuk, CR: Polychloropren, ABR: Butadien/Acrylsäure-C1-4-Alkylestercopolymere, IR: Polyisopren, SBR: statistische Styrol-Butadien-Copolymerisate, bevorzugt mit Styrolgehalten von 1-60, vorzugsweise 5-50 Gewichtsprozent, X-SBR: carboxylierte Styrol-Butadien-Copolymerisate, FKM: Fluorkautschuk, ACM: Acrylatkautschuk, NBR: Polybutadien-Acrylnitril-Copolymerisate, bevorzugt mit Acrylnitrilgehalten von 5-60, vorzugsweise 10-50 Gewichtsprozent, X-NBR: carboxlierte Nitrilkautschuke, IIR Isobutylen/Isopren-Copolymerisate bevorzugt mit Isoprengehalten von 0,5-10 Gewichtsprozent, BIIR: bromierte Isobutylen/Isopren-Copolymerisate, bevorzugt mit Bromgehalten von 0,1-10 Gewichtsprozent, CIIR: chlorierte Isobutylen/Isopren-Copolymerisate, bevorzugt mit Bromgehalten von 0,1-10 Gewichtsprozent, EPM: Ethylen/Propylen-Copolymerisate, EPDM: Ethylen-Propylen-Dien-Copolymerisate, EAM: Ethylen/Acrylatcopolymere, EVM:Ethylen/Vinylacetatcopolymere, CO und ECO: Epichlorhydrinkautschuke, Q: Silikonkautschuke, AU: Polyesterurethanpolymerisate, EU: Polyetherurethanpolymerisate, ENR: Epoxydierter Naturkautschuk oder Mischungen davon.

Bevorzugter wird der Dienkautschuk ausgewählt aus der Gruppe, die besteht aus: NR: Naturkautschuk, SBR: Styrol/Butadienkautschuk, SIBR: Styrol/Isopren/Butadienkautschuk, BR: Polybutadienkautschuk, NBR: Nitrilkautschuk, IIR: Butylkautschuk, SNBR: Styrol/Butadien/Acrylnitril-Kautschuk und CR: Polychloropren. Besonders bevorzugt sind die Dienkautschuke Polybutadien und/oder Nitrilkautschuk.

Bei Anwendungen, bei denen das Vulkanisat nicht mit einem ölhaltigen Medium in Kontakt kommt, wie z. B. bei Golfballkernen oder Tischtennisschlägerbelägen, ist der Dienkautschuk Polybutadien mit einem 1,4-cis-Gehalt > 90% bevorzugt. Diese Polybutadienkautschuke werden mit Hilfe von Ziegler-Katalysatoren auf der Basis von Ti, Ni, Co und Nd hergestellt. Derartige Polybutadienkautschuke und ihre Herstellung sind beispielsweise beschrieben in Ullmann's Encyclopedia of Industrial Chemistry, Rubber, 3. Synthetic (VCH Verlagsgesellschaft mbH, D-69451 Weinheim, 1993).

Bei Anwendungen, bei denen das Vulkanisat mit einem ölhaltigen Medium in Kontakt kommen kann, wie z. B. Walzenbelägen, sind Nitrilkautschuke bevorzugt. Derartige Nitrilkautschuke und ihre Herstellung sind beispielsweise beschrieben in Ullmann's Encyclopedia of Industrial Chemistry, Rubber, 3. Synthetic (VCH Verlagsgesellschaft mbH, D-69451 Weinheim, 1993).

Die vulkanisierbare Zusammensetzung der Erfindung enthält eine oder mehrere ungesättigte Carbonsäuren oder ein Salz davon. Diese Komponente dient als Co-Vernetzer. Dieses wird bevorzugt aus Metalldiacrylaten oder Metalldimethacrylaten ausgewählt. Die ungesättigte Carbonsäure ist bevorzugt eine alpha, beta ethylenisch ungesättigte Carbonsäure mit 3 bis 8 Kohlenstoffatomen wie Methacrylsäure, Acrylsäure, Zimtsäure und Crotonsäure, von denen die Acrylsäure und die Methacrylsäure bevorzugt sind. Geeignete Metallsalze sind solche von Natrium, Kalium, Magnesium, Calcium, Zink, Barium, Alminium, Zinn, Zirkonium, Lithium, worunter Natrium, Zink und Magnesium bevorzugt werden. Am meisten bevorzugten sind Zink-diacrylat und Zinkdimethacrylat. In den erfindungsgemäßen Zusammensetzungen werden bevorzugt 5 bis 70 phr ein oder mehrere ungesättigte Carbonsäuren oder deren Salze verwendet. Insbesondere werden ungefähr 15 bis ungefähr 50 phr verwendet. Erfindungsgemäß ist es auch möglich, die ungesättigte Carbonsäure und ein Metalloxid in die Zusammensetzung zu geben.

Weiterhin enthält die vulkanisierbare Zusammensetzung der Erfindung mindestens ein Peroxid, das vorzugsweise aus organischen Peroxiden, wie Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, t-Butylperbenzoat, 4,4-Di(t-butylperoxy)valeriansäurebutylester und 1,1-Bis(t-butyl-peroxy)-3,3,5-trimethylcyclohexan ausgewählt wird, oder es können die unten für die Mikrogelherstellung erwähnten Peroxide verwendet werden. Das Peroxid wird in einer Menge von 0,2 bis 10 phr, vorzugsweise in einer Menge von 0,2 bis 5 phr Peroxid eingesetzt.

Die vulkanisierbare Zusammensetzung der Erfindung weist bevorzugt folgende Zusammensetzung auf:

a) ein oder mehrere Dienkautschuke , vorzugsweise Polybutadien und/oder NBR,
b) 5 bis 70 phr eine oder mehrere ungesättigte Carbonsäuren oder Salze davon, vorzugsweise Zinkdiacrylat oder Zinkdimethacrylat,
c) 0,2 bis 10 phr ein oder mehrere Peroxide,
d) 5 bis 60 phr ein oder mehrere Mikrogel(e), vorzugsweise ein BR oder SBR-Mikrogel sowie
e) 0 bis 50 phr ein oder mehrer übliche Kautschukadditive, insbesondere ein oder mehrer Füllstoffe.

Übliche Kautschukadditive schließen beispielsweise ein: Füllstoffe, wie Ruß, Kieselsäure, Calcimoxid, Bariumsulfat, Titandioxid, Zinkoxid, Peptisiermitteln, Stearinsäure, Beschleuniger, Ozonschutzmittel, Antioxidationsmittel, Verarbeitungsöle, Aktivatoren, Weichmacher, Anvulkanisationshemmern, Extenderöle usw.

Das in der erfindungsgemäßen Zusammensetzung verwendete Mikrogel ist bevorzugt ein vernetztes Mikrogel auf der Basis von Homopolymeren oder statistischen Copolymeren. Bei den erfindungsgemäß verwendeten Mikrogelen handelt es sich somit bevorzugt um vernetzte Homopolymere oder vernetzte statistische Copolymere. Die Begriffe Homopolymere und statistische Copolymere sind dem Fachmann bekannt und beispielsweise erläutert bei Vollmert, Polymer Chemistry, Springer 1973.

Die in der erfindungsgemäßen Zusammensetzung enthaltenen Primärpartikel des Mikrogels (B) weisen bevorzugt eine annähernd kugelförmige Geometrie auf. Als Primärpartikel werden nach DIN 53206:1992-08 die durch geeignete physikalische Verfahren (Elektronenmikroskop), als Individuen erkennbare, in der kohärenten Phase dispergierten Mikrogelteilchen bezeichnet (Vgl. z.B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht eines Dünnschnitts mit einem Elektronenmikroskop erkennbar im wesentlichen eine kreisförmige Fläche bilden.

In den in der erfindungsgemäßen Zusammensetzung enthaltenen Primärpartikeln des Mikrogels (B) beträgt die Abweichung der Durchmesser eines einzelnen Primärpartikels, definiert als

$$[(d1 - d2) / d2] \times 100,$$

worin d1 und d2 zwei beliebige Durchmesser eines beliebigen Schnittes des Primärpartikels sind und d1 > d2 ist, bevorzugt weniger als 250 %, bevorzugter weniger als 200 %, noch bevorzugter weniger als 100 %, noch bevorzugter weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100,$$

worin d1 und d2 zwei beliebige Durchmesser eines beliebigen Schnittes des Primärpartikels sind und d1 > d2 ist, von weniger als 250 %, bevorzugter weniger als 200 %, noch bevorzugter weniger als 100 % noch bevorzugter weniger als 50 % auf.

Die vorstehend erwähnte Abweichung der Durchmesser der einzelnen Partikel wird nach folgendem Verfahren bestimmt. Zunächst wird wie in den Beispielen beschrieben eine TEM-Aufnahme eines Dünnschnitts der erfindungsgemäßen Zusammensetzung hergestellt. Dann wird eine transmissionselektronenmikroskopische Aufnahme bei einer Vergrößerung von 10000fach bis 85000fach hergestellt. In einer Fläche von 833,7 x 828,8 nm wird manuell an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

In der erfindungsgemäßen Zusammensetzung weisen die Primärpartikel des Mikrogels (B) bevorzugt einen durchschnittlichen Teilchendurchmesser von 5 bis 500 nm, bevorzugter von 20 bis 400, noch bevorzugter von 30 bis 300, noch bevorzugter 40 bis 100 nm auf (Durchmesserangaben nach DIN 53206).

Da sich die Morphologie der Mikrogele beim Einarbeiten in die vulkanisierbare Mischung im wesentlichen nicht verändert, entspricht der durchschnittliche Teilchendurchmesser der dispergierten Primärpartikel im wesentlichen dem durchschnittlichen Teilchendurchmesser des verwendeten Mikrogels.

In der erfindungsgemäßen Zusammensetzung weisen die eingesetzten Mikrogele zweckmäßig in Toluol bei 23˚C unlösliche Anteile (Gelgehalt) von mindestens etwa 70 Gew.-%, bevorzugter mindestens etwa 80 Gew.-%, noch bevorzugter mindestens etwa 90 Gew.-% auf. Der in Toluol unlösliche Anteil wird dabei in Toluol bei 23˚ bestimmt. Hierbei werden 250 mg des Mikrogels in 25 ml Toluol 24 Stunden unter Schütteln bei 23˚C gequollen. Nach Zentrifugation mit 20.000 Upm wird der unlösliche Anteil abgetrennt und getrocknet. Der Gelgehalt ergibt sich aus dem Quotienten des getrockneten Rückstandes und der Einwaage und wird in Gewichtsprozent angegeben.

In der erfindungsgemäßen Zusammensetzung weisen die eingesetzten Mikrogele zweckmäßig in Toluol bei 23˚C einen Quellungsindex von weniger als etwa 80, bevorzugter von weniger als 60 noch bevorzugter von weniger als 40 auf. So können die Quellungsindizes der Mikrogele (Qi) besonders bevorzugt zwischen 1 - 30 und 1-20 liegen. Der Quellungsindex wird aus dem Gewicht des in Toluol bei 23˚ für 24 Stunden gequollenen lösungsmittelhaltigen Mikrogels (nach Zentrifugation mit 20.000 Upm) und dem Gewicht des trockenen Mikrogels berechnet:

$$Qi = \text{Naßgewicht des Mikrogels} / \text{Trockengewicht des Mikrogels}.$$

Zur Ermittlung des Quellungsindex läßt man 250 mg des Mikrogels in 25 ml Toluol 24 h unter Schütteln quellen. Das Gel wird abzentrifugiert und gewogen und anschließend bei 70 ˚C bis zur Gewichtskonstanz getrocknet und nochmals gewogen.

In der erfindungsgemäßen Zusammensetzung weisen die eingesetzten Mikrogele zweckmäßig Glastemperaturen Tg von ―100˚C bis +100˚C, bevorzugter von ―80˚C bis +80˚C auf.

In der erfindungsgemäßen Zusammensetzung weisen die eingesetzten Mikrogele zweckmäßig eine Breite des Glasübergangs von größer als 5 ˚C, bevorzugt größer als 10˚C, bevorzugter größer als 20 ˚C auf. Mikrogele, die eine solche Breite des Glasübergangs aufweisen, sind in der Regel ― im Gegensatz zu vollständig homogen strahlenvernetzten Mikrogelen ― nicht vollständig homogen vernetzt. Dies führt dazu, dass die Moduländerung von der Matrixphase zur dispergierten Phase nicht unmittelbar ist. Hierdurch kommt es bei schlagartiger Beanspruchung nicht zu Abreißeffekten zwischen Matrix und dispergierter Phase, wodurch die mechanischen Eigenschaften, das Quellverhalten und die Spannungsrisskorrosion etc. vorteilhaft beeinflusst werden.

Die Bestimmung der Glastemperatur (Tg) und der Breite des Glasübergangs (ΔTg) der Mikrogele erfolgt mittels Differential-Scanning-Kalorimetrie-(DSC). Für die Bestimmung von Tg und ΔTg werden zwei Abkühl/Aufheiz-Zyklen durchgeführt. Tg und ΔTg werden im zweiten AufheizZyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100˚C abgekühlt und dann mit einer Geschwindigkeit von 20K/min auf +150˚C aufgeheizt wird. Der zweite DSC-Zyklus wird durch sofortige Abkühlung der Probe begonnen, sobald eine Probentemperatur von +150˚C erreicht ist. Die Abkühlung erfolgt mit einer Geschwindigkeit von ungefähr 320 K/min. Im zweiten Aufheizzyklus wird die Probe wie im ersten Zyklus noch einmal auf +150˚C aufgeheizt. Die Aufheizgeschwindigkeit im zweiten Zyklus ist erneut 20K/min. Tg und △Tg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die in der erfindungsgemäßen Zusammensetzung enthaltenen Mikrogele können in an sich bekannter Weise hergestellt werden (s. zum Beispiel EP-A- 405 216, EP-A-854171, DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38 488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR- und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben. Unter Mikrogelen werden erfindungsgemäß zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C1-4Alkylestercopolymere, |
| IR: | Polyisopren, |
| SBR: | statistische Styrol-Butadien-Copolymerisate mit Styrolgehalten von 1-60, vorzugsweise 5-50 Gewichtsprozent, |
| X-SBR: | carboxylierte Styrol-Butadien-Copolymerisate |
| FKM; | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte lsobutylen/lsopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und | |
| ECO: | Epichlorhydrinkautschuke, |

Q:          Silikonkautschuke,
AU:         Polyesterurethanpolymerisate,
EU:         Polyetherurethanpolymerisate
ENR:        Epoxydierter Naturkautschuk oder Mischungen davon.

Die Herstellung der unvernetzten Mikrogel-Ausgangsprodukte erfolgt zweckmäßig durch folgende Methoden:

1. Emulsionspolymerisation
2. Außerdem können natürlich vorkommende Latices wie z.B.

Naturkautschuklatex eingesetzt werden.

In der erfindungsgemäßen Zusammensetzung sind die verwendeten Mikrogele bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluorid, Hexafluorpropen, 2-Chlorbutadien, 2,3-Dichlorbutadien sowie doppelbindungshaltige Carbonsäuren wie z.B. Acrylsäure, Methacrylsäure, Maleinsäure, Itakonsäure etc., doppelbindungshaltige Hydroxyverbindungen wie z.B. Hydroxyethylmethacrylat, Hydroxyethylacrylat, Hydroxybutylmethacrylat, Aminfunktionalisierte (Meth)acrylate, Acrolein, N-Vinyl-2-pyrollidon, N-Allyl-Harnstoff und N-Allyl-Thioharnstoff, sekundäre Amino-(meth)-acrylsäureester wie 2-tert-Butylaminoethylmethacrylat und 2-tert-Butylaminoethylmethacrylamid etc. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung während der Emulsionspolymerisation ist bevorzugt. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Di-methylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 ˚C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrierungsmitteln, beispielsweise Organometallhydridkomplexe erfolgen.

Vor, während oder nach der Nachvernetzung kann ggf. eine Teilchenvergrößerung durch Agglomeration durchgeführt werden.

Bei dem erfindungsgemäß verwendeten Herstellungsverfahren werden bevorzugt nicht vollständig homogen vernetzte Mikrogele erhalten, die die oben beschriebenen Vorteile aufweisen können.

Als Mikrogele zur Herstellung der erfindungsgemäßen Zusammensetzung können sowohl nicht-modifizierte Mikrogele, die im wesentlichen keine reaktiven Gruppen insbesondere an der Oberfläche aufweisen als auch, modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z.B. Aldehyd-, Hydroxyl-, Carboxyl-, Nitril- etc. sowie schwefelhaltige Gruppen, wie z.B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist die Verbesserung der Mikrogelverträglichkeit mit der Matrix, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrollidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, daß das im Modifikationsschritt verwendete Monomer möglichst quantitativ auf das unmodifizierte Mikrogel aufpfropft. Zweckmäßigerweise werden die funktionellen Monomere vor der vollständigen Vernetzung der Mikrogele hinzudosiert.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natrium-isopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine Modifikation doppelbindungshaltiger Mikrogele wie z.B. durch Ozonolyse sowie durch Halogenierung mit Chlor, Brom und Jod kommen infrage. Auch eine weitere Umsetzung modifizierter Mikrogele wie z.B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch HydroxylGruppen insbesondere auch an der Oberfläche davon modifiziert. Der Hydroxylgruppengehalt der Mikrogele wird durch Umsetzung mit Acetanhydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 °C, bevorzugt 20-95 °C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Der mittlere Durchmesser der hergestellten Mikrogele kann mit hoher Genauigkeit beispielsweise auf 0,1 Mikrometer (100 nm) ± 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele inbesondere im Bereich zwischen 5 bis 500 nm lassen sich mit gleicher Genauigkeit (mindestens Gew.-75 % aller Teilchen liegen um das Maximum der integrierten Korngrößenverteilungskurve (bestimmt durch Lichtstreuung) in einem Bereich von ± 10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Kunststoffe eingestellt werden. Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99 ff).

Die Aufarbeitung der so hergestellten Mikrogele kann beispielsweise durch Eindampfen, Koagulation, durch Co-Koagulation mit einem weiteren Latexpolymer, durch Gefrierkoagulation (vgl. US-PS 2187146) oder durch Sprühtrocknung erfolgen. Bei der Aufarbeitung durch Sprühtrocknung können auch handelsübliche Fließhilfsmittel wie beispielsweise $CaCO_3$ oder Kieselsäure zugesetzt werden.

Die Erfindung betrifft weiterhin die vulkanisierte Erzeugnisse, die durch Vulkanisieren der erfindungsgemäßen Zusammensetzungen erhältlich sind.

Das Vulkanisieren der erfindungsgemäßen Zusammensetzungen wird in üblicher Weise in geeigneten Formwerkzeugen bei Temperaturen von bevorzugt 120 bis 200, bevorzugt von 140 bis 180 ˚C durchgeführt.

Die Erfindung betrifft somit auch ein Verfahren zur Herstellung der vulkanisierten Erzeugnissen, welches das Vulkanisieren der erfindungsgemäßen Zusammensetzungen umfasst.

Die Erfindung betrifft weiterhin die Verwendung der erfindungsgemäßen, vulkanisierbaren Zusammensetzung zur Herstellung von vulkanisierten Erzeugnissen, insbesondere zur Herstellung von Golfbällen oder Walzenbeläge.

Die Erfindung betrifft weiterhin Golfbälle, die das vulkanisierte Erzeugnis der Erfindung umfassen oder daraus bestehen.

Die Erfindung betrifft weiterhin Tischtennisschlägerbeläge, die das vulkanisierte Erzeugnis der Erfindung umfassen.

In diesen Anwendungen wird insbesondere Polybutadien bzw. Naturkautschuk als Matrixkautschuk verwendet.

Bezüglich der Herstellung der Golfbälle kann beispielsweise auf den eingangs erwähnten Stand der Technik hingewiesen werden, auf den vollinhaltlich Bezug genommen wird, wie die US 4715607.

Die Erfindung betrifft weiterhin eine Walze, umfassend einen Belag, umfassend das vulkanisierte Erzeugnis der Erfindung sowie eine Maschine, insbesondere eine Papierherstellungsmaschine oder eine Maschine zum Herstellen von bedruckten Erzeugnissen, insbesondere bedruckten Pappiererzeugnissen, die die genannten Walze umfasst. Die Erfindung betrifft schließlich auch ein Verfahren zur Herstellung von Papiererzeugnissen, unter Verwendung der genannten Maschine. In diesen Anwendungen wird insbesondere Nitrilkautschuk als Matrixkautschuk verwendet.

Die Erfindung wird durch nachstehende Beispiele weiter erläutert.

**BEISPIELE:**

**Hestellungsbeispiele für die Mikrogele:**

Nachfolgend wird die Herstellung der Mikrogele beschrieben, die in den weiteren Beispielen verwendet wurden:

Die Mikrogele A, B und C wurden durch Emulsionspolymerisation hergestellt, wobei folgende Monomere eingesetzt wurden: Butadien, Styrol, Trimethylolpropantrimethacrylat (TMPTMA) und Hydroxyethylmethacrylat (HEMA). Die für die Herstellung der Mikrogele verwendeten Monomeren sowie wesentliche Rezepturbestandteile sind in nachfolgender Tabelle 1 zusammengefasst:

Tabelle 1: Zusammensetzung der verwendeten Mikrogele

| Mikrogel | Wasser | | | Emulgatoren | | Monomere | | | |
|---|---|---|---|---|---|---|---|---|---|
| | Start [g] | Aktivierung [g] | Stoppen [g] | Mersolat K30/95[1) [g] | TCD[2)] (20%ig) [g] | Butadien [g] | Styrol [g] | TMPTMA (90 %ig) [g] | HEMA (96 %ig) [g] |
| A (Tg = -75˚C) | 12608 | 287 | 530 | 137 | 250 | 3805,5 | 0 | 172 | 322,5 |
| B (Tg = -65˚C) | 13742 | 251 | 125 | 137 | 250 | 2740,5 | 304,5 | 105 | 350,0 |
| C (Tg = +40˚C) | 13742 | 251 | 125 | 137 | 250 | 787,5 | 2345,0 | 105 | 262,5 |

[1)] Mersolat K 30/95® (Bayer AG) sind die Na-Salze langkettiger Alkylsulfonsäuren (Isomerenmischung). Der Gehalt an aktiver Substanz beträgt 95 Gew. %.
[2)] Na-Salz des Umsetzungsprodukts von bis-hydroxyformyliertem Dicyclopentadien mit Hexahydrophthalsäureanhydrid. Es wird eine wässrige Lösung mit 20 Gew.% aktiver Substanz eingesetzt (Der Emulgator wurde hergestellt nach: US 5.100.945; Erf.: A. Schmidt et al.; Prior.: 02.04.1991; offengelegt: 31.03.1992)

Für die Herstellung der Mikrogele wurden zuerst die in der Tabelle angegebenen Mengen der Emulgatoren Mersolat K30/95 und TCD in Wasser (Spalte "Start") gelöst und in einem 40 I-Autoklaven vorgelegt. Der Autoklav wurde dreimal evakuiert und mit Stickstoff beaufschlagt. Danach wurden die in der Tabelle angegebenen Monomeren zugegeben. Die Monomeren wurden unter Rühren in der Emulgatorlösung bei 30°C emulgiert.

Anschließend wurde eine wässrige Lösung bestehend aus 171 g Wasser, 1,71 g Ethylendiamintetraessigsäure (Merck-Schuchardt), 1,37 g Eisen(II)-sulfat*7H$_2$0, 3,51 g Natriumformaldehydsulfoxylat-hydrat (Merck-Schuchardt) sowie 5,24 g Trinatriumphosphat*12H$_2$O zudosiert (die hierfür verwendete Wassermenge ist in der in der Tabelle unter der Rubrik "Start" angegebenen Wassermenge enthalten).

Die Reaktion wurde gestartet durch Zugabe von 5,8 g p-Menthanhydroperoxid, 50%ig (Trigonox NT 50 der Akzo-Degussa), das mittels 10,53 g Mersolat K30/95 in der Hälfte der in der Rubrik "Aktivierung" aufgelisteten Wassermenge emulgiert wurde.

Nach 2,5 Stunden Reaktionszeit wurde die Reaktionstemperatur auf 40 °C erhöht. Nach einer weiteren Stunde Reaktionszeit wurde mit der gleichen Menge an Initiatorlösung (NT50 / Wasser / Mersolat K30/95), die auch für den Polymerisationsstart verwendet wurde, nachaktiviert. Hierbei wurde die Polymerisationstemperatur auf 50°C erhöht.

Bei Erreichen eines Polymerisationsumsatzes >95 % wurde die Polymerisation durch Zugabe von 23,5 g Diethylhydroxylamin abgestoppt. Hierfür wurde Diethylhydroxylamin in der Wassermenge gelöst, die in der Tabelle 1 in der Rubrik "Stoppen" aufgelistet ist.

Danach wurden nicht umgesetzte Monomeren durch Strippen mit Wasserdampf aus dem Latex entfernt.

Der Latex wurde filtriert und wie im Beispiel 2 der US 6399706 mit Stabilisator versetzt, koaguliert und getrocknet.

Die Gele wurden sowohl im Latexzustand mittels Ultrazentrifugation (Durchmesser und spezifische Oberfläche) sowie als Festprodukt bezüglich der Löslichkeit in Toluol (Gelgehalt, Quellingsindex/Ql), durch acidimitrische Titration (OH-Zahl und COOH-Zahl) und mittels DSC (Glastemperatur/Tg und Breite der Tg-Stufe) charakterisiert.

Die charakteristische Daten der in den Beispielen eingesetzten Mikrogele sind in nachfolgender Tabelle 2 zusammengestellt:

Tabelle 2: Eigenschaften der Mikrogele

| Mikrogel | Durchmesser | | | $O_{spez \cdot}$ [m$^2$/g] | Gelgehalt [Gew.%] | Quellungsindex | Tg [°C] | Breite der Tg-Stufe [°C] | OH-Zahl [mg$_{KOH}$/g$_{Pol \cdot}$] | Säure-Zahl [mg$_{KOH}$/g$_{Pol \cdot}$] |
|---|---|---|---|---|---|---|---|---|---|---|
| | $d_{10}$ [nm] | $d_{50}$ [nm] | $d_{80}$ [nm] | | | | | | | |
| A (Tg =-75°C) | 43,5 | 50,9 | 55,7 | 127 | 91,7 | 13,1 | -75 | 15,2 | 33 | 7,4 |
| B(Tg=-65°C) | 35,4 | 48,2 | 55,1 | 139 | 94,8 | 7,4 | -65,5 | 12 | 37,8 | 8,6 |
| C (Tg = +40°C) | 30,7 | 40,3 | 46,1 | 146 | 94,2 | 6,4 | +37,5 | 34,6 | 34,6 | 9,6 |

In der Tabelle 2 bedeuten:

$O_{spez.}$: spezifische Oerfläche in $m^2/g$

$\bar{d_z}$: Der Durchmesser $\bar{d_z}$ ist nach DIN 53 206 als der Median- oder Zentralwert definiert, oberhalb und unterhalb dessen, jeweils die Hälfte aller Teilchengrößen liegt. Der Teilchendurchmesser der Latexteilchen wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung praktisch nicht ändert.

Tg: Glastemperatur

Breite der Tg-Stufe (∆Tg)

Für die Bestimmung von Tg: und ∆Tg wird das Gerät DSC-2 von Perkin-Elmer benutzt.

Quellungsindex

Der Quellungsindex QI wurde wie folgt bestimmt:
Der Quellungsindex wird aus dem Gewicht des in Toluol bei 23° für 24 Stunden gequollenen lösungsmittelhaltigen Mikrogels und dem Gewicht des trockenen Mikrogels berechnet:
Qi = Naßgewicht des Mikrogels /Trockengewicht des Mikrogels.
Zur Ermittlung des Quellungsindex läßt man 250 mg des Mikrogels in 25 ml Toluol 24 h unter Schütteln quellen. Das mit Toluol gequollene (nasse) Gel wird nach Zentrifugation mit 20.000 Upm gewogen und anschließend bei 70 °C bis zur Gewichtskonstanz getrocknet und nochmals gewogen.

OH-Zahl (Hydroxylzahl)

Die OH-Zahl (Hydroxylzahl) wird nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wird.

Säurezahl

Die Säurezahl wird wie oben bereits erwähnt nach DIN 53402 bestimmt und entspricht der Menge KOH in mg, die erforderlich ist um ein g des Polymers zu neutralisieren.

Gelgehalt

Der Gelgehalt entspricht dem in Toluol unlöslichen Anteil bei 23°C. Er wird wie oben beschrieben bestimmt.

Glasübergangstemperatur

Die Glasübergangstemperaturen wurden wie oben erwähnt bestimmt.

Breite des Glasübergangs:

Die Breite des Glasübergangs wurde wie oben beschrieben bestimmt.

Herstellung der vulkanisierten Mischungen:

Die in Tabellen 3 und 4 gezeigten Zusammensetzungen wurden in üblicherweise in einem Laborinnenmischer gemischt und der Vulkanisation bei 160°C in einem geeigneten Formwerkzeug unterworfen. Die erhaltenen Probekörper wurden verschiedenen physikalischen Tests unterzogen (mit Ausnahme der Rücksprunghöhe wurden alle Parameter nach DIN-Verfahren gemessen; die Rücksprunghöhe wurde in Analogie zu einem DIN-Verfahren durch Ermittlung der Sprunghöhe von Gummibällen nach dem ersten Aufprall aus 43 cm Höhe als Prozentsatz der Ausgangshöhe ermittelt (Mittelwert aus mindestens 9 Einzelmessungen)), deren Ergebnisse ebenfalls in den Tabellen 3 und 4 gezeigt sind:

Tabelle 3

| Beispiel | | 1* | 2* | 3 | 4 | 5 | 6 | 7 | 8 |
|---|---|---|---|---|---|---|---|---|---|
| | | phr | phr | phr | phr | phr | phr | phr | phr |
| Polybutadien | | 100 | 100 | 100 | 100 | 100 | 100 | 100 | 100 |
| Mikrogel A | | 0 | 0 | 5 | 10 | 15 | 10 | 15 | 15 |
| Zinc Diacrylat | | 28 | 28 | 28 | 28 | 28 | 28 | 28 | 23 |
| Organisches Peroxid | | 1,2 | 1,2 | 1,2 | 1,2 | 1,2 | 1,2 | 1,2 | 1,2 |
| Zinkoxid | | 5 | 5 | 5 | 5 | 5 | 5 | 5 | 5 |
| Bariumsulfat | | 0 | 10 | 0 | 0 | 0 | 10 | 10 | 0 |
| Ruß N660 | | 0 | 10 | 0 | 0 | 0 | 10 | 10 | 0 |
| Zink Stearat | | 5 | 5 | 5 | 5 | 5 | 5 | 5 | 5 |
| **Mischungsprüfung** | | | | | | | | | |
| Rheometerexperiment bei 160 ˚C auf Monsanto MDR 2000 P | | | | | | | | | |
| Inkubationszeit t(i) | [min] | 0,34 | 0,32 | 0,34 | 0,35 | 0,33 | 0,33 | 0,34 | 0,32 |
| TC 10 | [min] | 0,34 | 0,31 | 0,33 | 0,34 | 0,32 | 0,31 | 0,32 | 0,31 |
| TC 90 | [min] | 1,72 | 1,19 | 1,44 | 1,51 | 1,31 | 1,14 | 1,15 | 1,51 |
| TC 95 | [min] | 2,41 | 1,64 | 2,02 | 2,09 | 1,9 | 1,57 | 1,57 | 2,12 |
| Mooneyviskosität (ML 1+ 4) | [ME] | 41 | 45 | 39 | 39 | 41 | 43 | 45 | 41 |
| **Vulkanisatprüfung** | | | | | | | | | |
| Dichte bei RT | g/cm$^3$ | 1,069 | 1,149 | 1,064 | 1,061 | 1,055 | 1,133 | 1,130 | 1,040 |
| Härte Shore A | ShA | 93 | 94 | 93 | 92 | 91 | 93 | 92 | 87 |
| Rückprallelastizität bei 23˚C | % | 69 | 69 | 69 | 69 | 69 | 69 | 68 | 69 |
| DVR, 24 h bei 100 ˚C | % | 57 | 58 | 50 | 54 | 45 | 52 | 42 | 37 |
| Zug-Dehnungsexperiment, Sofortprüfung bei RT | | | | | | | | | |
| Zugfestigkeit | MPa | 8,7 | 10,7 | 8,2 | 9,0 | 8,4 | 11,6 | 11,8 | 6,8 |
| Reißdehnung | % | 43 | 50 | 43 | 50 | 56 | 60 | 70 | 58 |
| Rücksprunghöhe bei RT | % | 84 | 87 | 84 | 83 | 84 | 84 | 83 | 83 |
| * Vergleichsbeispiel | | | | | | | | | |

Erläuterungen zu Tabelle 3:

phr bedeutet "Parts per Hundred Parts Rubber".

Das Polybutadien war Buna CB 23, ein Neodym-katalysiertes Hoch-Cis-Polybutadien von Lanxess AG, Deutschland.

Das Zinkdiacrylat war Sartomer 705 von Sartomer Co., USA.

Das Zinkoxid war Zinkweiß WS von Heubach.

Das Bariumsulfat war von Riedel de Haen.

Ruß N660 war von Degussa.

Zinkstearat war Zinc stearte von Faci.

Das organische Peroxid war Luperox 231 G40 (1,1-BIS(t-BUTYLPEROXY)-3,3,5-TRIMETHYLCYCLOHEXAN) von Atofina Chemicals.

Die Bestimmung der physikalischen Parameter erfolgte nach den einschlägigen DIN-Vorschriften. Ergänzend kann auf Kleemann, Weber, Formeln und Tabellen für die Elastomerverarbeitung, Dr. Gupta Verlag, 1994 hingewiesen werden.

Tabelle 3 zeigt Folgendes:

Die Beispiele 1 und 2 zeigen die Eigenschaften der vulkanisierten Mischungen ohne die erfindungsgemäß verwendeten Mikrogele mit Nachteilen im Fließverhalten, der Verarbeitungssicherheit, der Dichte, der Härte und des Druckverformungsrestes.

Die Beispiele 3 bis 5 zeigen den Einfluß des Mikrogels A. Es wird deutlich, daß die Mischungs- und Vulkanisateigenschaften z.B. in Bezug auf t90, Dichte, Härte, Reißdehnung, DVR verbessert werden können, ohne daß andere Eigenschaften wie t10, Rückprallelasitzität, Rücksprunghöhe und Zugfestigkeit leiden.

Die Mischungen 6 und 7 zeigen die Eigenschaften von Kombinationen aus Mikrogel, Bariumsulfat und Ruß. Hierbei bleiben die Verabeitungssicherheit (ti, t10), die Härte, die Rückprallelastizität und die Rücksprunghöhe erhalten, während die Zykluszeit (t90, t95), die Dichte, der Druckverformungsrest reduziert werden und gleichzeitig die Reißfestigkeit und die Reißdehnung deutlich zunehmen. Diese Effekte waren überraschend und nicht vorhersehbar.

Die Mischung 8 zeigt im Vergleich zu den Mischungen 1 und 5, dass es möglich ist, die Menge an Zinkdiacrylat zu reduzieren und damit die Dichte und die Härte deutlich zu senken, ohne daß es zu Nachteilen in der Verarbeitungssicherheit, der Rückprallelastizität oder der Rücksprunghöhe kommt.

Tabelle 4

| Beispiel | | 9* | 10 | 11 | 12 | 13 | 14 | 15 |
|---|---|---|---|---|---|---|---|---|
| | | Phr | phr | phr | phr | phr | phr | phr |
| Polybutadien | | 100 | 100 | 100 | 100 | 85 | 85 | 85 |
| Zinc Diacrylat | | 28 | 28 | 28 | 28 | 28 | 28 | 28 |
| Organisches Peroxid | | 1,2 | 1,2 | 1,2 | 1,2 | 1,2 | 1,2 | 1,2 |
| ZnO Weißsiegel | | 5 | 5 | 5 | 5 | 5 | 5 | 5 |
| Bariumsulfat | | 0 | 0 | 0 | 0 | 0 | 0 | 0 |
| Ruß N660 | | 0 | 0 | 0 | 0 | 0 | 0 | 0 |
| Zinkstearat | | 5 | 5 | 5 | 5 | 5 | 5 | 5 |
| Mikrogel A | | 0 | 15 | 0 | 0 | 15 | 0 | 0 |
| Mikrogel B | | 0 | 0 | 15 | 0 | 0 | 15 | 0 |
| Mikrogel C | | 0 | 0 | 0 | 15 | 0 | 0 | 15 |
| **Mischungsprüfung** | | | | | | | | |
| Rheometerexperiment bei 160 ˚C auf Monsanto MDR 2000 P | | | | | | | | |
| Inkubationszeit t(i) | [min] | 0,34 | 0,34 | 0,35 | 0,35 | 0,33 | 0,36 | 0,35 |
| TC 10 | [min] | 0,34 | 0,32 | 0,33 | 0,34 | 0,3 | 0,34 | 0,33 |
| TC 90 | [min] | 1,72 | 1,35 | 1,34 | 1,38 | 1,09 | 1,23 | 1,3 |
| TC 95 | [min] | 2,41 | 1,98 | 1,95 | 1,97 | 1,67 | 1,79 | 1,92 |
| ML 1+ 4 | [ME] | 41 1 | 42 | 42 | 40 | 45 5 | 42 | 39 |
| **Vulkanisatprüfung** | | | | | | | | |
| Dichte bei RT | g/cm3 | 1,069 | 1,053 | 1,053 | 1,060 | 1.069 | 1,071 | 1,081 |
| Härte Shore A | ShA | 93 | 92 | 93 | 95 | 93 | 94 | 96 |
| Rückprallelastizität | % | 69 | 69 | 69 | 67 | 69 | 68 | 67 |
| DVR, 24h 100 ˚C | % | 57 | 49 | 47 | 45 | 47 | 53 | 54 |

# EP 1 724 301 B1

(fortgesetzt)

| Beispiel | | 9* | 10 | 11 | 12 | 13 | 14 | 15 |
|---|---|---|---|---|---|---|---|---|
| | | Phr | phr | phr | phr | phr | phr | phr |
| Zug-Dehnungsexperiment, Sofortprüfung bei RT | | | | | | | | |
| Zugfestigkeit | MPa | 8,7 | 8,7 | 10,2 | 14,4 | 8,7 | 11,6 | 14,5 |
| Reißdehnung | % | 43 | 47 | 61 | 54 | 41 | 48 | 42 |
| Rücksprunghöhe bei RT | % | 84 | 85 | 84 | 86 | 84 | 83 | 82 |
| * Vergleichsbeispiel | | | | | | | | |

Die Beispiele 9 bis 12 in Tabelle 4 zeigen, daß alle Mikrogele die Verarbeitungssicherheit verbessern und gleichzeitig die Zyklenzeiten reduzieren. Die Dichte, der Druckverformungsrest sind reduziert. Die Härte, die Rückprallelastizität und die Rücksprunghöhe sind im wesentlichen unverändert. während gleichzeitig die Zugfestigkeit und die Reißdehnung so stark verbessert wurden wie das sonst nur mit hohen Dosierungen an Additiven hoher Dichte möglich ist.

Die Beispiele 13 bis 15 zeigen, daß alle Mikrogele völlig überraschend auch als Matrixersatz verwendet werden können. Dies ist sehr verwunderlich, weil sie bereits völlig vernetzt vorliegen, bevor die Einarbeitung in die Mischung erfolgt. Weiterhin ist überraschend, daß bei dieser Vorgehensweise die physikalischen Eigenschaften nur unwesentlich beeinflußt werden.

Zusammenfassend ergibt sich, dass die erfindungsgemäßen Zusammensetzungen, vulkanisierte Erzeugnisse mit verbesserten Eigenschaften bereitstellen, was sie insbesondere für die Herstellung von Golfbällen oder Walzenbeläge geeignet macht.


## Patentansprüche

1. Vulkanisierbare Zusammensetzung, enthaltend

   a) mindestens ein Dienkautschuk,
   b) mindestens eine ungesättigte Carbonsäure oder ein Salz davon,
   c) mindestens ein Peroxid,
   d) mindestens ein Mikrogel.

2. Vulkanisierbare Zusammensetzung nach Anspruch 1, worin der Dienkautschuk ausgewählt wird aus der Gruppe, die besteht aus: NR: Naturkautschuk, SIBR: Styrol/Isopren/Butadienkautschuk, BR: Polybutadienkautschuk, SNBR: Styrol/Butadien/Acrylnitril-Kautschuk, CR: Polychloropren, ABR: Butadien/Acrylsäure-C1-4-Alkylestercopolymere, IR: Polyisopren, SBR: statistische Styrol-Butadien-Copolymerisate, bevorzugt mit Styrolgehalten von 1-60, vorzugsweise 5-50 Gewichtsprozent, X-SBR: carboxylierte Styrol-Butadien-Copolymerisate, FKM: Fluorkautschuk, ACM: Acrylatkautschuk, NBR: Polybutadien-Acrylnitril-Copolymerisate, bevorzugt mit Acrylnitrilgehalten von 5-60, vorzugsweise 10-50 Gewichtsprozent, X-NBR: carboxlierte Nitrilkautschuke, IIR Isobutylen/Isopren-Copolymerisate bevorzugt mit Isoprengehalten von 0,5-10 Gewichtsprozent, BIIR: bromierte Isobutylen/Isopren-Copolymerisate, bevorzugt mit Bromgehalten von 0,1-10 Gewichtsprozent, CIIR: chlorierte Isobutylen/Isopren-Copolymerisate, bevorzugt mit Bromgehalten von 0,1-10 Gewichtsprozent, EPM: Ethylen/Propylen-Copolymerisate, EPDM: Ethylen-Propylen-Dien-Copolymerisate, EAM: Ethylen/Acrylatcopolymere, EVM: Ethylen/Vinylacetatcopolymere, CO und ECO: Epichlorhydrinkautschuke, Q: Silikonkautschuke, AU: Polyesterurethanpolymerisate, EU: Polyetherurethanpolymerisate, ENR: Epoxydierter Naturkautschuk oder Mischungen davon.

3. Vulkanisierbare Zusammensetzung nach Anspruch 2, worin der Dienkautschuk Polybutadien und/oder Nitrilkautschuk ist.

4. Vulkanisierbare Zusammensetzung nach einem der Ansprüche 1 bis 3, worin der Dienkautschuk Polybutadien ist, dessen cis-Gehalt größer als 90 % ist.

5. Vulkanisierbare Zusammensetzung nach einem der Ansprüche 1 bis 4, worin die ungesättigte Carbonsäure oder ein Salz davon aus Metalldiacrylaten ausgewählt wird.

**6.** Vulkanisierbare Zusammensetzung nach einem der Ansprüche 1 bis 4, worin die ungesättigte Carbonsäure oder ein Salz davon aus Metalldimethacrylaten ausgewählt wird.

**7.** Vulkanisierbare Zusammensetzung nach einem der Ansprüche 1 bis 6, worin das Salz der ungesättigten Carbonsäure ein Zinksalz ist.

**8.** Vulkanisierbare Zusammensetzung nach einem der Ansprüche 1 bis 7, worin das Peroxid ausgewählt wird aus der Gruppe, die besteht aus: organischen Peroxiden, wie Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, t-Butylperbenzoat, 4,4-Di(t-butylperoxy)valeriansäurebutylester und 1,1-Bis(t-butylperoxy)-3,3,5-trimethylcyclohexan.

**9.** Vulkanisierbare Zusammensetzung nach einem der Ansprüche 1 bis 8, enthaltend:

> a) ein oder mehrere Dienkautschuke,
> b) 5 bis 70 phr eine oder mehrere ungesättigte Carbonsäuren oder Salze davon,
> c) 0,2 bis 5 phr ein oder mehrere Peroxide,
> d) 5 bis 60 phr ein oder mehrere Mikrogel(e) und
> e) 0 bis 50 phr ein oder mehrer übliche Kautschukadditive.

**10.** Vulkanisierbare Zusammensetzung nach einem der Ansprüche 1 bis 9, worin das Mikrogel aus vernetzten Mikrogelen ausgewählt wird.

**11.** Vulkanisierbare Zusammensetzung nach einem der Ansprüche 1 bis 10, worin die Primärpartikel der Mikrogele eine annähernd kugelförmige Geometrie aufweisen.

**12.** Vulkanisierbare Zusammensetzung nach einem der Ansprüche 1 bis 11, **dadurch gekennzeichnet, dass** die Primärpartikel des Mikrogels (B) eine durchschnittliche Teilchengröße von 5 bis 500 nm aufweisen.

**13.** Vulkanisierbare Zusammensetzung nach einem der Ansprüche 1 bis 12, **dadurch gekennzeichnet, dass** die Mikrogele in Toluol bei 23°C unlösliche Anteile von mindestens etwa 70 Gew.-% aufweisen.

**14.** Vulkanisierbare Zusammensetzung nach einem der Ansprüche 1 bis 13, **dadurch gekennzeichnet, dass** die Mikrogele in Toluol bei 23°C einen Quellungsindex von weniger als etwa 80 aufweisen.

**15.** Vulkanisierbare Zusammensetzung nach einem der Ansprüche 1 bis 14, **dadurch gekennzeichnet, dass** die Mikrogele Glastemperaturen von -100°C bis +100°C aufweisen.

**16.** Vulkanisierbare Zusammensetzung nach einem der Ansprüche 1 bis 15, **dadurch gekennzeichnet, dass** die Mikrogele durch Emulsionspolymerisation erhältlich sind.

**17.** Vulkanisierte Erzeugnisse, erhältlich durch Vulkanisieren der Zusammensetzung nach einem der Ansprüche 1 bis 16.

**18.** Verfahren zur Herstellung von vulkanisierten Erzeugnissen, welches das Vulkanisieren der Zusammensetzung nach einem der Ansprüche 1 bis 16 umfasst.

**19.** Verwendung der vulkanisierbaren Zusammensetzung nach einem der Ansprüche 1 bis 16 zur Herstellung von vulkanisierten Erzeugnissen.

**20.** Verwendung der vulkanisierbaren Zusammensetzung nach einem der Ansprüche 1 bis 16 zur Herstellung von Golfbällen, Tischtennisschlägerbelägen oder Walzenbeläge.

**21.** Golfball, umfassend das vulkanisierte Erzeugnis nach Anspruch 17.

**22.** Tischtennisschlägerbelag, umfassend das vulkanisierte Erzeugnis nach Anspruch 17.

**23.** Walze, umfassend einen Belag, umfassend das vulkanisierte Erzeugnis nach Anspruch 17.

24. Maschine, insbesondere Papierherstellungsmaschine oder Druckmaschine, umfassend Walze nach Anspruch 23.

25. Verfahren zur Herstellung von Papiererzeugnissen oder bedruckten Erzeugnissen, unter Verwendung der Maschine nach Anspruch 24.

**Claims**

1. Vulcanisable composition, containing a) at least one diene rubber, b) at least one unsaturated carboxylic acid or a salt thereof, c) at least one peroxide, d) at least one microgel.

2. Vulcanisable composition according to claim 1, wherein the diene rubber is selected from the group consisting of: NR: natural rubber, SIBR: styrene/isoprene/butadiene rubber, BR: polybutadiene rubber, SNBR: styrene/butadiene/ acrylonitrile rubber, CR: polychloroprene, ABR: butadiene/acrylic acid C1-4 alkyl ester copolymers, IR: polyisoprene, SBR: random styrene-butadiene copolymers, preferably with styrene contents of 1 to 60, preferably 5 to 50 percent by weight, X-SBR: carboxylated styrene-butadiene copolymers, FKM: fluororubber, ACM: acrylate rubber, NBR: polybutadiene-acrylonitrile copolymers, preferably with acrylonitrile contents of 5 to 60, preferably 10 to 50 percent by weight, X-NBR: carboxylated nitrile rubbers, IIR: isobutylene/isoprene copolymers, preferably with isoprene contents of 0.5 to 10 percent by weight, BIIR: brominated isobutylene/isoprene copolymers, preferably with bromine contents of 0.1 to 10 percent by weight, CIIR: chlorinated isobutylene/isoprene copolymers, preferably with bromine contents of 0.1 to 10 percent by weight, EPM: ethylene/propylene copolymers, EPDM: ethylene-propylene-diene copolymers, EAM: ethylene/acrylate copolymers, EVM: ethylene/vinyl acetate copolymers, CO and ECO: epichlorohydrin rubbers, Q: silicone rubbers, AU: polyester urethane polymers, EU: polyether urethane polymers, ENR: epoxydised natural rubber or mixtures thereof.

3. Vulcanisable composition according to claim 2, wherein the diene rubber is polybutadiene and/or nitrile rubber.

4. Vulcanisable composition according to any one of claims 1 to 3, wherein the diene rubber is polybutadiene of which the cis content is greater than 90 %.

5. Vulcanisable composition according to any one of claims 1 to 4, wherein the unsaturated carboxylic acid or a salt thereof is selected from metal diacrylates.

6. Vulcanisable composition according to any one of claims 1 to 4, wherein the unsaturated carboxylic acid or a salt thereof is selected from metal dimethacrylates.

7. Vulcanisable composition according to any one of claims 1 to 6, wherein the salt of the unsaturated carboxylic acid is a zinc salt.

8. Vulcanisable composition according to any one of claims 1 to 7, wherein the peroxide is selected from the group consisting of: organic peroxides, such as dicumyl peroxide, t-butylcumyl peroxide, bis-(t-butyl-peroxy-isopropyl) benzene, dit-butyl peroxide, 2,5-dimethylhexane-2,5-dihydroperoxide, 2,5-dimethylhexyne-3,2,5-dihydroperoxide, dibenzoyl peroxide, bis-(2,4-dichlorobenzoyl)peroxide, t-butyl perbenzoate, 4,4-di-(t-butylperoxy)valeric acid butyl ester and 1,1-bis-(t-butylperoxy)-3,3,5-trimethyl cyclohexane.

9. Vulcanisable composition according to any one of claims 1 to 8, containing: a) one or more diene rubbers, b) 5 to 70 phr of one or more unsaturated carboxylic acids or salts thereof, c) 0.2 to 5 phr of one or more peroxides, d) 5 to 60 phr of one or more microgels and e) 0 to 50 phr of one or more conventional rubber additives.

10. Vulcanisable composition according to any one of claims 1 to 9, wherein the microgel is selected from crosslinked microgels.

11. Vulcanisable composition according to any one of claims 1 to 10, wherein the primary particles of the microgels have an approximately spherical geometry.

12. Vulcanisable composition according to any one of claims 1 to 11, **characterised in that** the primary particles of microgel (B) have an average particle size of 5 to 500 nm.

13. Vulcanisable composition according to any one of claims 1 to 12, **characterised in that** the microgels exhibit fractions of at least approximately 70 % by weight which are insoluble in toluene at 23 ˚C.

14. Vulcanisable composition according to any one of claims 1 to 13, **characterised in that** the microgels have a swelling index of less than approximately 80 in toluene at 23˚C.

15. Vulcanisable composition according to any one of claims 1 to 14, **characterised in that** the microgels have glass transition temperatures of-100 ˚C to +100 ˚C.

16. Vulcanisable composition according to any one of claims 1 to 15, **characterised in that** the microgels are obtainable by emulsion polymerisation.

17. Vulcanisable products obtainable by vulcanisation of the composition according to any one of claims 1 to 16.

18. Process for producing vulcanised products which comprises the vulcanisation of the composition according to any one of claims 1 to 16.

19. Use of the vulcanisable composition according to any one of claims 1 to 16 to produce vulcanised products.

20. Use of the vulcanisable composition according to any one of claims 1 to 16 to produce golf balls, table tennis bat coatings or roll coverings.

21. Golf ball comprising the vulcanised product according to claim 17.

22. Table tennis bat coating comprising the vulcanised product according to claim 17.

23. Roll comprising a covering comprising the vulcanised product according to claim 17.

24. Machine, in particular a paper manufacturing machine or printing machine, comprising a roll according to claim 23.

25. Method for the production of paper products or printed products using the machine according to claim 24.

**Revendications**

1. Composition vulcanisable, contenant

   a) au moins un caoutchouc diène,
   b) au moins un acide carboxylique insaturé ou un sel d'un tel acide,
   c) au moins un peroxyde,
   d) au moins un microgel.

2. Composition vulcanisable selon la revendication 1, dans laquelle le caoutchouc diène est choisi dans le groupe qui est constitué par : NR : le caoutchouc naturel, SIBR : le caoutchouc styrène/isoprène/butadiène, BR : le caoutchouc polybutadiène, SNBR : le caoutchouc styrène/butadiène/acrylonitrile, CR : le polychloroprène, ABR : des copolymères butadiène/acrylate d'alkyle en $C_1$-$C_4$, IR : le poly-isoprène, SBR : des copolymères statistiques styrène/butadiène, de préférence à teneurs en styrène de 1-60, encore mieux de 5-50 % en poids, X-SBR : des copolymères styrène/butadiène carboxylés, FKM : un caoutchouc fluoré, ACM : le caoutchouc acrylate, NBR : des copolymères polybutadiène/acrylonitrile, de préférence à teneurs en acrylonitrile de 5-60, encore mieux de 10-50 % en poids, X-NBR: des caoutchoucs nitrile carboxylés, IIR : des copolymères isobutylène/isoprène, de préférence à teneurs en isoprène de 0,5-10 % en poids, BIIR : des copolymères isobutylène/isoprène bromés, de préférence à teneurs en brome de 0,1-10 % en poids, CIIR : des copolymères isobutylène/isoprène chlorés, de préférence à teneurs en brome de 0,1-10 % en poids, EPM : des copolymères éthylène/propylène, EPDM : des copolymères éthylène/propylène/diène, EAM : des copolymères éthylène/acrylate ; EVM : des copolymères éthylène/acétate de vinyle, CO et ECO : des caoutchoucs épichlorhydrine, Q : des caoutchoucs silicone, AU : des polymères polyester uréthanne, EU : des polymères polyuréthanne, ENR : du caoutchouc naturel époxydé, ou des mélanges de ceux-ci.

3. Composition vulcanisable selon la revendication 2, dans laquelle le caoutchouc diène est le polybutadiène ou le caoutchouc nitrile.

4. Composition vulcanisable selon l'une quelconque des revendications 1 à 3, dans laquelle le caoutchouc diène est un polybutadiène dont la teneur en *cis* est supérieure à 90 %.

5. Composition vulcanisable selon l'une quelconque des revendications 1 à 4, dans laquelle l'acide carboxylique insaturé ou un sel d'un tel acide est choisi parmi les diacrylates de métaux.

6. Composition vulcanisable selon l'une quelconque des revendications 1 à 4, dans laquelle l'acide carboxylique insaturé ou un sel d'un tel acide est choisi parmi les diméthacrylates de métaux.

7. Composition vulcanisable selon l'une quelconque des revendications 1 à 6, dans laquelle le sel de l'acide carboxylique insaturé est un sel de zinc.

8. Composition vulcanisable selon l'une quelconque des revendications 1 à 7, dans laquelle le peroxyde est choisi dans le groupe qui est constitué par : des peroxydes organiques, tels que le peroxyde de dicumyle, le peroxyde de tert-butyle et de cumyle, le bis(tert-butyl-peroxy-isopropyl)benzène, le peroxyde de di-tert-butyle, le 2,5-dihydroperoxyde de 2,5-diméthylhexane, le 3,2,5-di-hydroperoxyde de 2,5-diméthylhexyne, le peroxyde de dibenzoyle, le peroxyde de bis(2,4-dichlorobenzoyle), le perbenzoate de tert-butyle, le 4,4-di(tert-butylperoxy)valérate de butyle et le 1,1-bis(tert-butylperoxy)-3,3,5-triméthylcyclohexane.

9. Composition vulcanisable selon l'une quelconque des revendications 1 à 8, contenant

   a) un ou plusieurs caoutchoucs diène,
   b) 5 à 70 phr (parties pour 100 parties de caoutchouc) d'un ou plusieurs acides carboxyliques insaturés ou de leurs sels,
   c) 0,2 à 5 phr d'un ou plusieurs peroxydes,
   d) 5 à 60 phr d'un ou plusieurs microgel(s), et
   e) 0 à 50 phr d'un ou plusieurs additifs usuels pour caoutchouc.

10. Composition vulcanisable selon l'une quelconque des revendications 1 à 9, dans laquelle le microgel est choisi parmi des microgels réticulés.

11. Composition vulcanisable selon l'une quelconque des revendications 1 à 10, dans laquelle les particules primaires des microgels présentent une géométrie approximativement sphérique.

12. Composition vulcanisable selon l'une quelconque des revendications 1 à 11, **caractérisée en ce que** les particules primaires du microgel (B) présentent une taille moyenne de particule de 5 à 500 nm.

13. Composition vulcanisable selon l'une quelconque des revendications 1 à 12, **caractérisée en ce que** les microgels comportent au moins environ 70 % en poids de fractions insolubles dans du toluène à 23 ˚C.

14. Composition vulcanisable selon l'une quelconque des revendications 1 à 13, **caractérisée en ce que** les microgels ont un indice de gonflement de moins d'environ 80 dans du toluène à 23 ˚C.

15. Composition vulcanisable selon l'une quelconque des revendications 1 à 14, **caractérisée en ce que** les microgels ont des températures de transition vitreuse de - 100˚C à +100 ˚C.

16. Composition vulcanisable selon l'une quelconque des revendications 1 à 15, **caractérisée en ce que** les microgels peuvent être obtenus par polymérisation en émulsion.

17. Produits vulcanisés, pouvant être obtenus par vulcanisation de la composition selon l'une quelconque des revendications 1 à 16.

18. Procédé pour la fabrication de produits vulcanisés, qui comprend la vulcanisation de la composition selon l'une quelconque des revendications 1 à 16.

19. Utilisation de la composition vulcanisable selon l'une quelconque des revendications 1 à 16, pour la fabrication de produits vulcanisés.

20. Utilisation de la composition vulcanisable selon l'une quelconque des revendications 1 à 16, pour la fabrication de balles de golf, de revêtements de raquettes de tennis de table ou de revêtements de cylindres.

21. Balle de golf, comprenant le produit vulcanisé selon la revendication 17.

22. Revêtement de raquette de tennis de table, comprenant le produit vulcanisé selon la revendication 17.

23. Cylindre, comportant un revêtement comprenant le produit vulcanisé selon la revendication 17.

24. Machine, en particulier machine pour la fabrication du papier ou machine à imprimer, comprenant un cylindre selon la revendication 23.

25. Procédé pour la fabrication de produits en papier ou de produits imprimés, avec utilisation de la machine selon la revendication 24.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 405216 A
- DE 4220563 A
- GB 1078400 A
- DE 19701487
- DE 19701489
- DE 19701488
- DE 19834804
- DE 19834803
- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 4715607 A
- US 4955613 A
- EP 0386915 A
- US 5836831 A
- US 6001930 A
- JP 2004180729 A
- JP 62089750 A
- US 4683257 A
- JP 2004337231 A
- JP 2004180716 A
- JP 2002355339 A
- US 20030013553 A1
- US 20020119837 A1
- WO 0152947 A1
- WO 0152945 A1
- WO 0152943 A1
- EP 854171 A
- US 5302696 A
- US 5442009 A
- US 2187146 A
- US 5100945 A
- US 6399706 B

### In der Beschreibung aufgeführte Nicht-Patentliteratur

- Ullmann's Encyclopedia of Industrial Chemistry, Rubber, 3. Synthetic. VCH Verlagsgesellschaft mbH, 1993
- Römpp Lexikon, Lacke und Druckfarben. Georg Thieme Verlag, 1998
- **HOUBEN-WEYL.** *Methoden der organischen Chemie,* vol. 14/2, 848
- **H.G. ELIAS.** Makromoleküle. 1992, vol. 2, 99 ff
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250
- **KLEEMANN ; WEBER.** Formeln und Tabellen für die Elastomerverarbeitung. Dr. Gupta Verlag, 1994